# EUROPEAN PATENT APPLICATION

(11) **EP 2 233 285 A1**
(43) Date of publication of application: **29.09.2010**
(21) Application number: 09405055.6
(22) Date of filing: 23.03.2009
(51) Int. Cl.: B32B 27/32, B32B 27/34, B29C 47/00, B29C 55/28

(54) **Multilayer film for packaging hard cheese**

(71) Applicant: 3A Technology & Management AG, 8212 Neuhausen am Rheinfall (CH)
(72) Inventor: Menard, Rico, 9533 Kirchberg (CH); Jacobsen, Sven, 26683 Fallingbostel (DE)

(57) **Abstract**

A multilayer film (20) for the production of flow wrap packaging for hard cheese has a polyamide layer as outer layer (23) and a sealable polyolefin layer as inner layer (25), and optionally at least one middle layer. The outer layer (23), the inner layer (25) and, if present, the middle layer/s are coextruded to form a biaxially oriented 3B film, and the multilayer film (20) has a maximum degree of shrinking of 5% at most when exposed to temperature.

## Description

The invention relates to a multilayer film for the production of flow wrap packaging for hard cheese, with a polyamide layer as outer layer and a sealable polyolefin layer as inner layer, and optionally at least one middle layer, wherein the outer layer, the inner layer and, if present, the middle layer/s are coextruded to form a biaxially oriented 3B film. The invention also relates to a process suitable for manufacturing the multilayer film.

Known films for the production of flow wrap packaging for hard cheese are normally laminates such as oPA 15 µm / ink / adhesive / PE 40 or 50 µm. Such laminates are normally laminated using a two component polyurethane adhesive system and/or extrusion-lamination. The biaxially oriented polyamide (oPA) film forming the outer layer is used as a printing support for printing. The inner layer generally consists of a heat sealable film of a polyolefin such as polyethylene (PE) manufactured e.g. in the blow or cast extrusion process. In the production process via adhesive lamination the individual films are connected to the laminate using solvent-containing or solvent-free two-component adhesives. This process has several disadvantages: the adhesive lamination process is not harmless due to solvent wastage and solvent recycling both from an economical and ecological view. Other risk factors are e.g. primary aromatic amines which can migrate into the packaged good due to adhesive which has not fully reacted. Therefore, a process which does not include reactive chemistry would be desirable. A partial solution of this problem is the production process via extrusion lamination. Here, the adhesive function is taken over by a polymer melt applied between the individual films and - depending on the requirements - polyethylene or a polyethylene based acidic, anhydrous acidic or acrylic copolymer is used as an adhesion donor. In addition, the sealing layer may be applied to the inner side of the laminate as an extruded film by extrusion coating technique. With higher requirements to the laminate, so-called solvent-containing primers are necessary as tie layers, which complicate the process in view of the logistics of the raw materials.

A substantial disadvantage of the lamination is a significant limitation of the functionality of the sealing film which is obtainable e.g. with coextruded cast or blown films. A process creating a multilayer film suitable for flow wrap packaging solely from the melt in one production step without the need of raw material handling from a solvent would therefore be desirable.

The finished pack properties, such as the feel of the surface or haptics, form stability, strength etc., are achieved by a corresponding combination of the layers regarding arrangement and thickness. The variation range in the domain of oriented films is limited e.g. in regard to available thickness and variety. Therefore, e.g. biaxially oriented polyamide films with a thickness of less than 15 µm can not be produced economically by using conventional processes. This leads to solutions which function from a technical point of view, but regarding the corresponding pack properties, such as thermally resistant outer layer, sealability etc., the necessary material consumption is unproportionally high. Therefore, in order to achieve the desired finished pack properties, suitable multilayer film for flow wrap packaging which could be produced in a single process step with easy adjustable layer structure both in sequence and thickness are desirable.

Biaxially stretched polymeric multilayer films can be produced via blown film extrusion by forming two or three bubbles. The process is called "double bubble (2B)" and "triple bubble (3B)" process, respectively. The blown film extrusion with three bubbles, i.e. the "triple bubble process", as explained in the following, is herein also named "3B process" and films produced with the 3B process are called "3B films".

In the 3B process, a polymer mass is extruded through a ring-shaped nozzle or circular extrusion die forming a thick tube in the form of a monolayer or multilayer film, calibrated to an exact diameter after leaving the nozzle and thereafter quenched.

Subsequently, the tube is heated to a selected stretching temperature and in a further step inflated with air or another suitable gas between two pairs of nip rolls to enlarge the diameter of the bubble, thereby forming a second bubble and being stretched in transverse direction (TD). The stretching in longitudinal or machine direction (MD) is carried out by adjusting a different rotation speed of the nip rolls. The tube expanded to a bubble is in this way transported with a higher speed compared to the extrusion speed so that its orientation is maintained in transverse and in machine direction, respectively.

The stretching process, applied on the film during the first two bubble steps, introduces some mechanical stress in the film. Consequence is the tendency of the film to shrink back, close to its initial dimension, as soon as heated to temperatures similar to the temperatures applied during the stretching process in the second bubble.

To control the mechanical tension introduced in the film by the biaxial orientation and the following rapid quench, the film is expanded to a third bubble and fixed in the inflated state, thereby maintaining a controlled temperature and a controlled inner pressure of the bubble. This heat treatment of the third bubble contributes to the flatness especially of multilayer films, thereby maintaining high stability and good mechanical strength obtained by biaxial orientation. An additional advantage of the third bubble process is to control the film residual mechanical stress and, consequently, the shrinking properties of the final package if heated afterward.

Main application for 2B and 3B webs are shrink films for vacuum skin packaging. Shrink behaviours are targeted in order to allow minimal headspace in packaging of foodstuffs or other items.

From EP 1 410 902 A1, WO 2004/080805 A2, WO 01/03922 A1 and WO 2004/110755 A1 multilayer films produced by the 2B and 3B process are known as so called shrink films for airtight packaging of foodstuffs, the film during the shrinking process snuggling closely to the goods to be packed without forming air containing microcavities. Particularly for packaging large pieces of meat including bones, a tube continuously manufactured using the 2B or 3B process is divided into individual tube sections. Each tube section is first closed at one of its tube openings by heat sealing. The pouch produced in this way and still being open on one side is closed after filling of the goods to be packed by a second heat sealing and thereafter shrinked by applying heat until the pouch film fully snuggles the filling. The degree of shrinking of the multilayer films is typically between 20 and 60 %.

Due to the heavy shrinking of 3B films by exposing to high temperature, until today the use of these films in packaging was limited to the aforementioned use of the shrinking process for the packaging of products where a form-fit wrapping is desired.

WO 2008/037441 A1 discloses a multilayer film for the production of flow wrap packaging for hard cheese, with a biaxially oriented polyamide layer as outer layer and a sealable polyolefin layer as inner layer. The outer layer and the sealable inner layer are coextruded to form a biaxially oriented 3B film.

The object of the present invention is to provide a multilayer film of the kind described at the start which can be manufactured without the disadvantages of the prior art processes.

That objective is achieved by way of the invention in that the percentage of polyamide in terms of the overall weight of the 3B film is 15 to 40 wt.%, the overall thickness of the 3B film is 50 µm at most and the 3B film has a maximum degree of shrinking measured under 150°C of 5% at most in all directions.

The polyamide (PA) layer takes over the mechanical strength and is the main layer for the extension in the second bubble and the stabilisation material in the third bubble.

The percentage of polyamide in terms of the overall weight of the 3B film is preferably 20 to 30 wt.%, and the thickness of the 3B film is preferably 40 µm at most. The overall thickness of the multilayer film should be as low as possible so that the energy requirement during fixation is not so high that the production speed must be lowered.

If the percentage of polyamide in terms of the overall weight of the 3B film is below 20 wt.%, the thickness of the polyamide layer is no longer sufficient to assure a stable orientation process in the second bubble, and the bubble becomes unstable. If the percentage of polyamide in terms of the overall weight of the 3B film is above 30 wt.%, the stabilisation process in the third bubble becomes too slow and therefore unprofitable because of a decreasing machine speed.

The multilayer film according to the present invention is suitable for the production of flow wrap packaging for hard cheese, preferably in the form of cheese slices, grated cheese or even blocks of cheese.

A process suitable for manufacturing the multilayer film is **characterized in that** the percentage of polyamide in terms of the overall weight of the 3B film is 15 to 40 wt.%, the overall thickness of the 3B film is 50 µm at most and time and temperature in the third bubble are selected to achieve a maximum degree of shrinking of the 3B film measured under 150°C of 5% at most in all directions.

The setting and adjustment of time and temperature conditions in the third bubble to achieve the required low degree of shrinking of the 3B film can be determined by a person skilled in the art.

A practically negligible shrinking is intended. Preferably, the admissible maximum degree of shrinking of the 3B films measured under 150°C is 2% at most, preferably 1% at most in all directions.

Preferably, time (x) and temperature (y) in the third bubble are chosen from time and temperature values (x, y) located on or above a graph defined by the formula y = 305.86 · x ^{-0.0918}.

The 3B films used according to the present invention are thermally stabilized and fixed in the third bubble, respectively. Therewith it is assured that the films will not shrink or curl during additional processing steps such as e.g. manufacturing flow wrap packaging by sealing various film webs.

With the 3B coextrusion process the deformation of the material in the second bubble results in films that behave isotropic over the whole surface area so that practically the whole 3B film production can be processed to flow wrap packaging.

The coextrusion via the 3B process of all layers necessary for the manufacture of flow wrap packaging in one process operation leads to saving one or more process steps and therefore also to reduced costs in comparison with conventional production processes.

A significant advantage of the 3B films according to the present invention in comparison to conventionally manufactured films and laminates, respectively, is, among others, the following. Due to the fact that using the 3B coextrusion process, films with biaxially oriented layers of substantially lower thickness can be produced, which leads to substantial material savings. Using a 3B process, films with a biaxially oriented PA layer having a thickness of e.g. 2 to 12 µm are possible.

Another advantage is the possibility of dyeing an inner layer of the film, thus preventing contamination of the sealing layer with dye when winding the film. The same way the outer layer of the film may be whitened to have a white background for later printing the outer side of the film.

Still another advantage of the multilayer films manufactured according to the present invention is that the functionalities of high puncture resistance and good barrier properties can be created in one single process step.

Further advantages are a higher operational safety, better environmental conditions and reduced process costs by avoiding reactive adhesives and solvents during the production process. Still another advantage of the multilayer films manufactured according to the present invention is the omission of the curing times for adhesively bonded laminates which in turn leads to time and cost savings.

The 3B film produced with the 3B process is slit and wound in a roll. For an additional lacquering, printing, over-lacquering and/or for carrying out other additional process steps in order to achieve technological and optical properties, the 3B film tube manufactured with the 3B process can be cut into a desired width in order to carry out the further processing steps, wound, supplied to the further processing steps and subsequently processed directly into flow wrap packaging.

Compared to conventional processes for the manufacture of multilayer films for flow wrap packaging via adhesive lamination, the multilayer film according to the present invention manufactured by the 3B process offers the following advantages:
- less process steps, thus lower actual costs
- no need for recycling or burning solvents
- omission of curing times, hence shortening the production process
- omission of 2-component adhesives and thus primary aromatic amines in the production process
- greater standardisation of the production process, hence advantages in logistics, reduced production documentation, less work with lab analysis
- less curl
- no risk of delamination

The 3B multilayer film according to the present invention used in the manufacture of flow wrap packaging for hard cheese has preferably one of the following layer configurations:
PA : tie : PE (3 layers)
PA : tie : PA : tie : PE (5 layers)
PA : tie : PA : EVOH : PA : tie : PE (7 layers)

The tie layers comprise e.g. a material on the basis of maleic acid anhydride (MAH), acrylate or carbonic acids.

Due to the PA layers the film has excellent tear and puncture resistance. The EVOH layer exhibits an improved oxygen barrier. The outermost PA layers may be white or transparent. Using PA and EVOH thickness distributions one can define barrier necessities of produced films.

The sealing layer preferably contains a material selected of the group consisting of polyolefines (PO), particularly polyethylene (PE) or polypropylene (PP), polyesters and copolymers thereof, as well as ionomeres (ION), hotmelt adhesive, particularly on the basis of ethylene vinylacetate copolymer (EVA), ethylene butyl acrylate (EBA), ethylene methyl acrylate (EMA), and blends of the aforementioned materials.

The 3B film can be printed and overlacquered with a thermo-protective lacquer.

Further advantages, features and details of the invention are revealed in the following description of preferred exemplary embodiments and with the aid of the drawing which shows schematically in
- Fig. 1: the layer composition of a conventionally manufactured packaging film for the production of flow wrap packaging for hard cheese according to the prior art;
- Fig. 2: the layer composition of a multilayer film for the production of flow wrap packaging for hard cheese according to the present invention manufactured via the 3B process;
- Fig. 3: a first alternative layer composition of a multilayer film for the production of flow wrap packaging for hard cheese according to the present invention manufactured via the 3B process;
- Fig. 4: a second alternative layer composition of a multilayer film for the production of flow wrap packaging according to the present invention manufactured via the 3B process;
- Fig. 5: tempering condition for shrink rates < 2%.

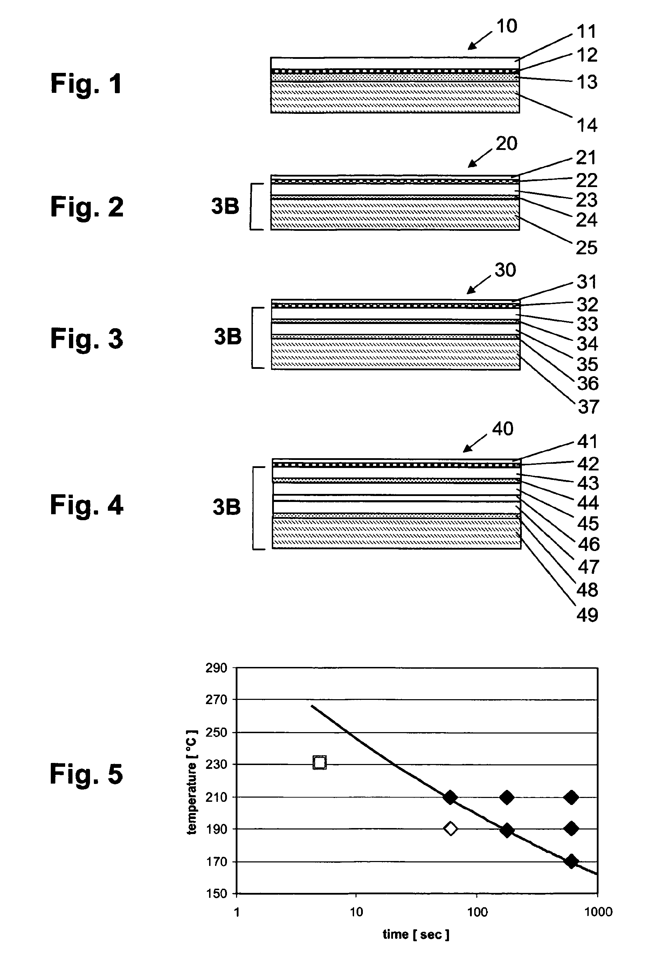

A conventionally manufactured multilayer film 10 according to the prior art shows in Fig. 1 the following layer configuration:
- 11: oPA film, 15 µm
- 12: ink printing
- 13: adhesive layer, 2-7 g/m²
- 14: PE sealing film, 40-50 µm

In the production of the multilayer film 10, in a first step, the oPA film 11 is reverse printed with ink 12. In a second step, the PE sealing film 14 is bonded to the reverse printed PET film 11 via adhesive layer 13.

A multilayer film 20 manufactured according to the present invention shows in Fig. 2 the following layer configuration:
- 21: thermal protective lacquer layer
- 22: ink printing
- 23: PA layer
- 24: tie layer
- 25: PE sealing layer

In the production of the multilayer film 20 according to the present invention, at first a biaxially oriented 3B film (see Fig. 2) is manufactured by coextruding PA, tie, and PE forming later the sealing layer. The PE sealing layer can be provided with antistatic properties. After manufacturing the multilayer film 20 in the described manner, the PA layer 23 is front printed with ink 22 and the ink printing 22 is then overlacquered with the thermal protective lacquer 21.

A first alternative multilayer film 30 manufactured according to the present invention shows in Fig. 3 the following layer configuration:
- 31: thermal protective lacquer layer
- 32: ink printing
- 33: PA layer
- 34: tie layer
- 35: PA layer
- 36: tie layer
- 37: PE sealing layer

In the production of the multilayer film 30 according to the present invention, at first a biaxially oriented 3B film (see Fig. 3) is manufactured by coextruding PA, tie, PA, tie and PE forming later the sealing layer. The PE sealing layer can be provided with antistatic, slip and antiblock properties. After manufacturing the multilayer film 30 in the described manner the PA layer 33 is front printed with ink 32 and the ink printing 32 is overlacquered with the thermal protective lacquer 31.

A second alternative multilayer film 40 manufactured according to the present invention shows in Fig. 4 the following layer configuration:
- 41: thermal protective lacquer layer
- 42: ink printing
- 43: PA layer
- 44: tie layer
- 45: PA layer
- 46: EVOH layer
- 47: PA layer
- 48: tie layer
- 49: PE sealing layer

In the production of the multilayer film 40 according to the present invention, at first a biaxially oriented 3B film (see Fig. 4) is manufactured by coextruding PA, tie, PA, EVOH, PA, tie and PE forming later the sealing layer. The PE sealing layer and eventually also the PA layer can be provided with antistatic, slip and antiblock properties. After manufacturing the multilayer film 40 in the described manner the PA layer 43 is front printed with ink 42 and the ink printing 42 is overlacquered with the thermal protective lacquer 41.

### Example

3B multilayer films with the configuration PA : tie : PE and an overall thickness of 35 µm have been manufactured on a 3-Layer Triple Bubble (3B) Machine. The 3B films are thermally stabilized and fixed in the third bubble, respectively. In the present manufacturing process the time and temperature condition in the third bubble was 5 seconds at 230°C. Sealing tests at temperatures of 130°C to 170°C with films manufactured that way resulted in a considerable shrinking of up to > 10% in machine direction (MD) and transverse (TD) direction. For this reason, the films have subsequently been tempered in a furnace to enable a relaxation of the films as complete as possible.

The following tempering conditions have been applied to the 3B films: 1, 3 and 10 minutes, respectively, at temperatures of 150, 170, 190 and 210°C. For tempering, the films have been fixed in a frame so that their shape could be maintained during tempering. The films treated that way have been tempered again at 160°C for 3 minutes, however without being fixed in a frame. Thereafter, the shrinking of the films have been determined with the aid of a line pattern printed onto the films. Surprisingly it has been found that the degree of shrinking (shrink rate) was < 2% in machine direction (MD) and transverse direction (TD) with the selected tempering conditions if the following condition is fulfilled:
The values for time (x) and temperature (y) corresponding to the tempering conditions must be located on or above the graph y = 305.86 · x ^{-0.0918} shown in Fig.1.

The twelve different tempering conditions applied to the 3B films as mentioned above, i.e., 1, 3 and 10 minutes at temperatures of 150, 170, 190 and 210°C, as well as the actual tempering condition of 5 seconds at 230°C applied to the 3B film during the present manufacturing process in the third bubble are shown in the diagram of Fig 5.

The shrink rates in machine direction (MD) and transverse (TD) direction measured for films that have been tempered under conditions as mentioned above and after-tempered at 160°C for 3 minutes are listed in Table 1.

**Table 1: Shrink rates for different tempering conditions**

| **Tempering conditions** | **Shrink rates (MD/TD)** |
|---|---|
| 170°C / 10 minutes | 1% / 1,5% |
| 190°C / 1 minutes | 3,5% / 4,5% |
| 190°C / 3 minutes | 2% / 2% |
| 190°C / 10 minutes | 0,5% / 1,5% |
| 210°C / 1 minutes | 1,5% / 2% |
| 210°C / 3 minutes | 1% / 1,5% |
| 210°C / 10 minutes | 0,5% / 1% |
| without tempering | 5% / 6% |

Consonant with the findings as outlined above, the values for time (x) and temperature (y) of the tempering conditions in Table 1 corresponding to shrink rates ≤ 2% are located on or above the graph y = 305.86 · x ^{-0.0918} as shown in Fig. 5.

## Claims

1. Multilayer film with a polyamide layer as outer layer and a sealable polyolefin layer as inner layer, and optionally at least one middle layer, wherein the outer layer, the inner layer and, if present, the middle layer/s are coextruded to form a biaxially oriented 3B film,
**characterized in that**
the percentage of polyamide in terms of the overall weight of the 3B film is 15 to 40 wt.%, the overall thickness of the 3B film is 50 µm at most and the 3B film has a maximum degree of shrinking measured under 150°C of 5% at most in all directions.

2. Multilayer film according to claim 1, **characterized in that** the 3B has a maximum degree of shrinking measured under 150°C of 2% at most, preferably 1% at most in all directions.

3. Multilayer film according to claim 1 or 2, **characterized in that** the percentage of polyamide in terms of the overall weight of the 3B film is 20 to 30 wt.%.

4. Multilayer film according to one of claims 1 to 3, **characterized in that** the thickness of the 3B film is 40 µm at most.

5. Multilayer film according to one of claims 1 to 4, **characterized in that** the 3B film has one of the following layer constructions:
PA : tie : sealing layer
PA : tie : PA : time : sealing layer
PA : tie : PA : EVOH . PA : tie : sealing layer where t is a tie layer.

6. Multilayer film according to claim 5, **characterized in that** the tie layer is a material on the basis of maleic acid anhydride (MAH), acrylate or carbonic acid.

7. Multilayer film according to one of claims 1 to 6, **characterized in that** the sealing layer is a material selected from the group consisting of polyolefines (PO), particularly polyethylene (PE) or polypropylene (PP), or polyolefin copolymer.

8. Multilayer film according to one of claims 1 to 7, **characterized in that** the 3B film is printed and/or covered with a thermal protective lacquer.

9. Use of a multilayer film according to one of the preceding claims for the production of flow wrap packaging for hard cheese.

10. Process for manufacturing a multilayer film for the production of flow wrap packaging for hard cheese, with a polyamide layer as outer layer and a sealable polyolefin layer as inner layer, and optionally at least one middle layer, wherein the outer layer, the inner layer and, if present, the middle layer/s are coextruded to form a biaxially oriented 3B film, **characterized in that**
the percentage of polyamide in terms of the overall weight of the 3B film is 15 to 40 wt.%, the overall thickness of the 3B film is 50 µm at most and time and temperature in the third bubble are selected to achieve a maximum degree of shrinking of the 3B film measured under 150°C of 5% at most in all directions.

11. Process according to claim 10, **characterized in that** time (x) and temperature (y) in the third bubble are chosen from time and temperature values (x, y) located on or above a graph defined by the formula y = 305.86 · x ^{-0.0918}.

12. Process according to claim 10 or 11, **characterized in that** the 3B film is printed and/or provided with a thermal protective lacquer.
